# FASCICULE DE BREVET EUROPEEN

(11) **EP 2 401 245 B1**
(45) Date de publication et mention de la délivrance du brevet: **19.06.2013**
(21) Numéro de dépôt: 10708609.2
(22) Date de dépôt: 24.02.2010
(51) Int. Cl.: C04B 37/02, C04B 41/50, C04B 41/52, C04B 41/87, C04B 41/89, C10G 9/16, F16L 49/04, F23G 5/44, F28F 21/04

(54) **DISPOSITIF COMPORTANT UN TUBE CÉRAMIQUE REVETU ET UNE FRETTE**
VORRICHTUNG ENTHALTEND EIN BESCHICHTETES KERAMIKROHR UND EINEN SCHRUMPFRING
DEVICE COMPRISING A COATED CERAMIC TUBE AND A SHRINK RING

(30) Priorité: 24.02.2009 FR 0951176
(43) Date de publication de la demande: 04.01.2012
(73) Titulaire: Saint-Gobain Centre De Recherches Et D'etudes Europeen, 92400 Courbevoie (FR)
(72) Inventeur: HIS, Christian, F-84300 Cavaillon (FR); VILLERMAUX, Franceline, F-84000 Avignon (FR); BELLY, Guillaume, F-84800 Isle Sur La Sorge (FR)
(74) Mandataire: Sartorius, Jérome
(86) Numéro de dépôt international: PCT/IB2010/050810
(87) Numéro de publication internationale: WO 2010/097764

(56) Documents cités:
- EP-A- 1 044 944
- EP-A- 1 829 847
- FR-A- 2 645 941
- JP-A- 58 130 547
- US-A1- 2002 025 454

## Description

### Domaine technique

L'invention se rapporte notamment à un appareil choisi parmi un four, une chaudière, un surchauffeur, un générateur de vapeur, un réacteur chimique et un échangeur thermique, notamment destiné à la production d'éthylène. En particulier, elle concerne des moyens pour assurer ou améliorer une connexion bout à bout entre un tube en céramique (en particulier, en carbure de silicium) et un tube métallique, avec ou sans contact direct entre les deux tubes.

### Etat de la technique

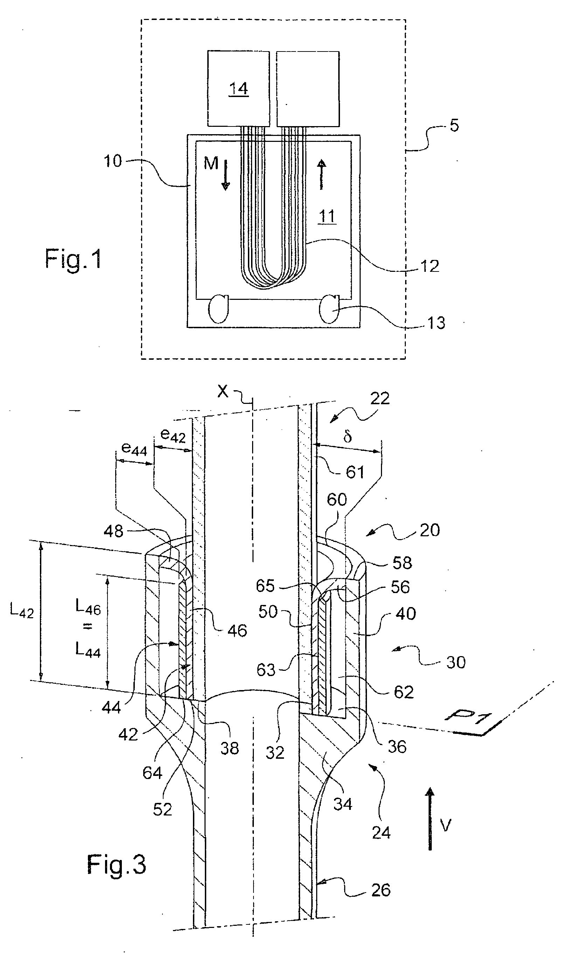

La production d'éthylène résulte classiquement d'un vapocraquage, en anglais « steam cracking », à partir d'éthane ou de naphta. A cet effet, une unité de production d'éthylène 5, telle que représentée schématiquement sur la figure 1, comporte classiquement un four 10 comprenant une enceinte 11 traversé par un faisceau de tubes 12 et chauffée par au moins un brûleur 13.

Les tubes 12, de section circulaire, présentent un diamètre extérieur compris entre 50 et 250 mm et une paroi d'une épaisseur comprise entre 5 et 25 mm. Ces tubes, repliés en épingle, présentent une longueur à l'intérieur de l'enceinte du four de plusieurs mètres. Ils sont constitués en alliage de fer, de nickel et de chrome.

Pour produire de l'éthylène, des moyens d'alimentation 14 alimentent une extrémité amont des tubes 12 avec un mélange réactif M d'hydrocarbures et de vapeur d'eau, une température supérieure à 1000°C étant maintenue dans l'enceinte 11. Le débit de ce mélange est adapté de manière à ce que le mélange réactif M puisse atteindre une température supérieure à 750 °C et réagir pour conduire à la production d'éthylène.

La production d'éthylène conduit à un dépôt de coke sur les surfaces intérieures des tubes 12, faisant chuter la productivité.

En particulier, il a été découvert que le nickel de l'alliage constituant les tubes catalyse la production de coke. Les chercheurs ont donc envisagé de remplacer les tubes métalliques par des tubes exempts de nickel, en particulier des tubes céramiques. Les tubes céramiques doivent pouvoir être connectés au reste de l'installation, et en particulier à des tubes métalliques utilisés pour amener le mélange réactif ou pour évacuer les produits de la réaction. Des recherches ont donc été conduites pour trouver des dispositifs de liaison adaptés, en particulier capables de résister aux cycles thermiques, typiquement d'une amplitude de plus de 700°C, qui résultent des arrêts des fours.

En particulier, les tubes céramiques et les tubes métalliques présentent des coefficients de dilatation très différents, typiquement d'environ 4.10⁻⁶K⁻¹ et d'environ 18.10⁻⁶ K⁻¹, respectivement. Dans les applications visées, les connections testées conduisent à des pertes d'étanchéité, voire à une désolidarisation des tubes.

Par exemple, FR 2 645 941 décrit un dispositif de liaison entre un support métallique et un élément tubulaire céramique dans lequel une bague est fixée sur le support et entoure le tube céramique avec un jeu fonctionnel. L'étanchéité est obtenue par un joint de coke résultant du fonctionnement de l'unité de production, Ce jeu fonctionnel conduit cependant, au démarrage de l'unité de production, à des fuites d'hydrocarbures.

En outre, la liaison n'est pas mécaniquement fiable, notamment à température ambiante. Il n'est donc pas adapté à un environnement tel que celui d'un four de production d'éthylène.

De plus, le décokage ne peut s'effectuer à la vapeur d'eau, mais doit nécessairement résulter d'une abrasion mécanique.

Enfin, le dispositif de liaison décrit dans FR 2 645 941 ne peut être appliqué que dans des installations générant du coke.

### Résumé de l'invention

Il existe donc un besoin pour un nouveau dispositif de liaison, notamment adapté à la connexion d'un tube céramique avec un tube métallique dans un environnement tel que celui d'un four de production d'éthylène, mais sans y être limité.

Un objectif de l'invention est donc de répondre, au moins partiellement, à ce besoin.

On atteint ce but au moyen d'un dispositif selon l'une quelconque des revendications 1 à 12, d'un appareil selon la revendication 13, par l'utilisation d'un appareil selon la revendication 14, ou au moyen d'un procédé selon la revendication 15 au 16.

Un dispositif selon l'invention peut présenter une ou plusieurs des caractéristiques optionnelles suivantes :
- La couche de transition présente une épaisseur supérieure à 0,1 µm.
- L'épaisseur de la couche de transition est inférieure à 10 µm, de préférence inférieure à 8 µm, de préférence inférieure à 6 µm.
- La couche de transition est constituée d'une couche de silice continûment adhérente au substrat.
- L'épaisseur du revêtement est inférieure à 300 µm, de préférence inférieure à 250 µm.
- L'épaisseur du revêtement, de préférence sensiblement constante, est supérieure à 10 µm, de préférence supérieure à 30 µm.
- Le matériau de revêtement présente une conductivité thermique et/ou une émissivité inférieure et/ou une effusivité supérieure à celle du substrat.
- Le rapport de la conductivité thermique du matériau du substrat sur la conductivité thermique du matériau de revêtement est supérieur à 10 et/ou inférieur à 150.
- Le matériau de revêtement présente une conductivité thermique inférieure à 10 W.m⁻¹⁰C⁻¹ de préférence est un matériau réfractaire.
- Le composé de silicium est un composé non oxyde.
- Le matériau de revêtement comporte plus de 50%, de préférence plus de 80%, de préférence plus de 90%, de préférence encore sensiblement 100% dudit au moins un oxyde céramique, en pourcentage massique.
- Le matériau de revêtement est choisi dans le groupe formé par la zircone, éventuellement dopée, notamment en magnésie ou en oxyde d'yttrium ; la cordiérite ; l'alumine ; la mullite ; le spinelle alumine-magnésie ; le titanate d'aluminium ; l'oxyde d'yttrium ; l'oxyde de magnésium ; l'oxyde d'hafnium et les mélanges de ces matières. Avantageusement, la pièce revêtue présente alors de bonnes propriétés anti-adhésion et anti-rayures, résiste bien à la corrosion et présente une faible exsudation en température.
- Le matériau de revêtement comporte plus de 80% de zircone. Le matériau de revêtement peut notamment être de la zircone ou une zircone dopée. De préférence, le matériau de revêtement comporte moins de 5%, moins de 1%, moins de 0,1%, voire pas de composé d'alliage métallique de silicium, et en particulier de silice.
- Le revêtement est recouvert, au moins en partie, de préférence complètement, par une couche en un matériau compliant telle que décrit ci-après. Avantageusement, le revêtement agit efficacement comme une barrière anti-diffusion améliorant la résistance aux chocs thermiques.
- De préférence, le revêtement est recouvert, au moins en partie, de préférence complètement, par une couche en un matériau compliant tel que décrit ci-après elle-même recouverte par la première frette.
- La quantité massique de carbure de silicium dans la premiere pièce est supérieure à 80%, de préférence supérieure à 90%. De préférence ledit matériau de la premiere pièce est constitué de carbure de silicium.
- La première pièce présente une porosité totale inférieure à 5%, inférieure à 2%, voire inférieure à 1%.

Comme expliqué ci-dessus, le revêtement peut en effet notamment être utilisé pour revêtir une première pièce afin d'éviter des transferts thermiques trop rapides avec une première frette lors du montage de cette dernière.

Les inventeurs ont également découvert que lorsqu'une première frette est montée sur une pièce revêtue selon l'invention, le revêtement limite très efficacement les réactions chimiques entre les matériaux de la première pièce et de la première frette. Le revêtement agit ainsi comme une barrière limitant la diffusion de matière entre la première pièce et la première frette. Il en résulte une résistance au cyclage thermique améliorée.

En particulier pour limiter ces transferts thermiques et/ou ces réactions chimiques, mais sans y être limité, les caractéristiques suivantes, optionnelles, sont préférées :
- La première frette est elle-même frettée au moyen d'une deuxième frette.
- Le revêtement recouvre au moins partiellement une surface cylindrique, notamment de section transversale circulaire, de la première pièce et/ou de la première frette et/ou, le cas échéant, de la deuxième frette.
- Le revêtement ceinture ladite surface cylindrique.
- Le revêtement définit au moins une partie, de préférence la totalité de la zone de contact entre ladite première frette et ladite première pièce et/ou, le cas échéant entre ladite deuxième frette et ladite première frette.
- Le revêtement est disposé au moins sur au moins 50%, de préférence au moins 80%, de préférence encore sensiblement 100% de ladite zone de contact.
- De préférence, le revêtement s'étend à partir du bord de la première pièce ou de la première frette par laquelle la première pièce pénètre dans la première frette lors du montage.
- Une deuxième pièce est fixée sur la première frette.

De manière générale, l'invention concerne un ensemble comportant une pièce revêtue telle que décrite ci-dessus et une frette montée sur ladite pièce revêtue, ladite pièce revêtue comportant un substrat en un matériau à base d'un composé de silicium et un revêtement en un matériau de revêtement contenant au moins un oxyde céramique, une couche de transition comportant de la silice s'étendant entre le substrat et le revêtement, ledit revêtement définissant au moins une partie de la zone de contact entre ladite frette et ladite pièce revêtue.

L'invention concerne encore l'application d'un revêtement tel que défini ci-dessus entre une première pièce et une première frette montée sur La première pièce comme « barrière anti-diffusion », c'est-à-dire pour limiter la migration de matière entre lesdites première pièce et première frette.

Lors des opérations de nettoyage, la pression à l'intérieur des tubes d'une unité de production d'éthylène peut être augmentée considérablement et atteindre typiquement plusieurs bars. Lors du cyclage thermique, l'étanchéité de la liaison par les frettes peut être également remise en cause par la pression du mélange réactif, typiquement supérieure à 2,5 bars, à des températures supérieures à 900°C, voire supérieures à 1000°C.

Les inventeurs ont donc recherché des solutions complémentaires pour améliorer l'étanchéité de la liaison entre deux pièces soumises à de telles contraintes, et en particulier entre deux pièces présentant des coefficients de dilatation très différents.

Ils ont ainsi découvert un dispositif comportant un premier organe assemblé à un deuxième organe présentant de préférence un coefficient de dilatation supérieur au premier organe, l'assemblage étant effectué par l'intermédiaire d'un matériau compliant constitué par un alliage comportant au moins deux matières parmi l'argent, l'or, et le palladium. Les inventeurs ont constaté que ledit matériau compliant résiste très bien à un environnement soumis de grandes variations de températures, en assurant une bonne cohésion des organes assemblés et une étanchéité de la liaison.

Un tel dispositif peut optionnellement encore comporter une ou plusieurs des caractéristiques suivantes :
- L'alliage comporte, voire est constitué
   - d'argent et/ou d'or et
   - de palladium.
- L'alliage comporte plus de 0,5%, voire plus de 3% de palladium, en pourcentage massique.
- L'alliage comporte moins de 50% de palladium, en pourcentage massique.
- L'alliage comporte moins de 30% de palladium, en pourcentage massique.
- L'alliage comporte moins de 5 % de fritte de verre.
- L'épaisseur de matériau compilant entre les deux organes est inférieure à 1 mm et/ou supérieure à 5 µm, de préférence supérieure à 10 µm.
- Le deuxième organe est une frette du premier organe.
- Le matériau du deuxième organe présente un coefficient de dilatation supérieur au matériau du premier organe entre 20°C et 1000°C.
- La quantité massique de carbure de silicium dans le matériau du premier organe est supérieure à 80%.
- Le premier organe est revêtu d'un revêtement en un matériau réfractaire.
- Le matériau réfractaire est de préférence choisi parmi la zircone, une zircone dopée, la cordiérite, l'alumine, la mullite, le titanate d'aluminium, l'oxyde d'yttrium, l'oxyde de magnésium, l'oxyde d'hafnium et un mélange de ces matériaux.
- Le premier organe est revêtu d'un revêtement en un matériau présentant une conductivité thermique inférieure à celle du matériaux du premier organe. Il est également décrit un procédé d'assemblage d'un premier organe et d'un deuxième organe par l'intermédiaire d'un matériau compliant interposé entre une première surface du premier organe et une deuxième surface du deuxième organe, procédé dans lequel
   a) on enduit au moins une des première et deuxième surfaces au moyen d'un précurseur d'un matériau compilant tel que défini ci-dessus ;
   b) on presse la première surface sur la deuxième surface avec une pression supérieure à 5 MPa, et
   c) de préférence simultanément à l'étape b) on chauffe à une température supérieure à 150°C lesdites première et deuxième surfaces en contact.

De préférence, à l'étape a), on enduit du précurseur de matériau compliant à la fois la première surface et la deuxième surface. De préférence encore, à l'étape b), la pression est exercée en frettant le premier organe au moyen du deuxième organe.

Le précurseur de matériau compliant peut en particulier être une suspension de poudres d'argent et/ou d'or et de paliadium.

Le premier organe et le deuxième organe peuvent en particulier être une première pièce et une première frette, respectivement, ou une première frette et une deuxième frette, respectivement, d'un dispositif selon l'invention. En présence d'une première pièce et de deux frettes, le précurseur de matériau compliant peut en particulier être disposé de manière que le matériau compilant s'étende entre la première pièce et la première frette et entre la première frette et la deuxième frette.

### Brève description des figures

D'autres caractéristiques et avantages de l'invention apparaîtront encore à la lecture de la description détaillée qui va suivre et du dessin annexé dans lequel :
- la figure 1 représente, schématiquement, une unité de production d'éthylène ;
- la figure 2 représente, en coupe transversale, une frette et une pièce frettée avant et après assemblage ;
- la figure 3 représente, en perspective et coupé par un plan longitudinal médian, un dispositif selon un mode de réalisation préféré de l'invention ;
- les figures 4 à 6 illustrent les différentes étapes d'un procédé utilisé pour assembler le dispositif représenté sur la figure 3 ; et
- la figure 7 représente une variante d'un dispositif selon l'invention.

Dans les différentes figures, des références identiques sont utilisées pour désigner des organes identiques ou analogues.

### Description détaillée

La figure 1 a été décrite en préambule de la description.

Le frettage est une technique de montage axial d'une pièce extérieure sur une pièce intérieure exploitant une différence de comportement dilatométrique entre ces deux pièces. La pièce extérieure est classiquement appelée « frette », en anglais « flange ». La pièce intérieure est dite « frettée ».

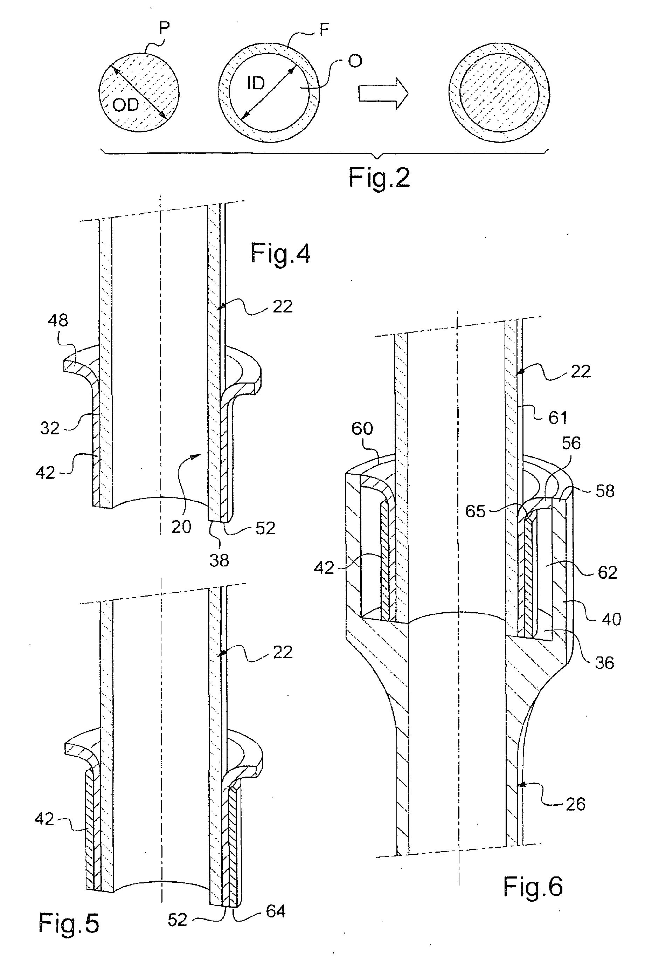

Plus précisément, la frette est en un matériau présentant un coefficient de dilatation thermique supérieur à celui de la pièce intérieure. Comme représenté sur la figure 2, la frette F présente un orifice O, délimité par une surface intérieure, dont les dimensions rendent difficile, voire impossible son montage sur la pièce intérieure P à la main ou même, classiquement, à la presse. Lorsque la frette F est cylindrique de section transversale circulaire, son diamètre intérieur ID est ainsi inférieur au diamètre extérieur OD de la pièce intérieure P dans la plage des températures prévues pour l'utilisation de l'assemblage. Dans cette plage, le montage de la frette est donc impossible. Pour cela, la frette F doit être portée à une température supérieure à celle de la pièce intérieure P. Cet écart de températures peut être obtenu en chauffant la frette F et/ou en refroidissant la pièce intérieure P, par exemple avec de l'azote liquide ou avec de la glace carbonique. L'écart de températures doit être déterminé pour que les dimensions de l'orifice 0 de la frette F autorisent alors son introduction sur la pièce intérieure.

Une fois la frette F introduite sur la pièce intérieure P, l'ensemble est ramené à la même température, par exemple à la température ambiante initiale, ce qui conduit la frette F à comprimer la pièce intérieure et assure la cohésion entre la frette F et la pièce intérieure P.

Cette cohésion peut cependant être remise en cause si la température de l'environnement de l'assemblage augmente. En effet, la frette va alors se dilater plus rapidement que la pièce intérieure. Une augmentation de la température peut donc conduire à une perte d'étanchéité, voire à une désolidarisation involontaire des pièces.

En particulier, dans les conditions de variation de température d'un four d'une unité de production d'éthylène, les inventeurs ont constaté qu'un assemblage d'un tube métallique par frettage sur un tube céramique est insatisfaisant. Les coefficients de dilatation thermique des matériaux de ces tubes sont en effet trop différents pour que le frettage puisse assurer une liaison fiable sur une plage de températures d'une amplitude de plus de 1000°C.

US 4,624,484 décrit un dispositif de connexion permettant d'assembler une pièce céramique au moyen d'une frette. Avant montage de la frette, une couche en un métal non ferreux est appliquée sur la surface intérieure de la frette destinée à être mise en contact avec la pièce céramique. Après montage, cette couche se déforme de manière à compenser les différences de dilatation entre le tube céramique et la frette. Une telle couche, ou de manière générale un revêtement, ne sont pas des frettes.

Les inventeurs ont alors imaginé assurer la liaison entre le tube céramique et le tube métallique au moyen de plusieurs frettes intermédiaires présentant des coefficients de dilatation augmentant progressivement : Une première frette présentant un coefficient de dilatation thermique légèrement supérieur à celui du tube céramique a été montée sur ce tube céramique, une deuxième frette présentant un coefficient de dilatation thermique légèrement supérieur à celui de la première frette a été montée sur cette première frette, ce type de montage étant reproduit jusqu'à obtenir une frette présentant un coefficient de dilatation thermique similaire à celui du tube métallique. Le tube métallique a ensuite été fixé sur cette dernière frette. Des essais ont cependant montré que, dans les conditions de variation de température d'un four d'une unité de production d'éthylène, cette solution technique conduit à l'application de contraintes élevées sur le tube céramique et peut amener à sa rupture.

Les inventeurs ont alors imaginé et réalisé un dispositif de liaison de conception tout à fait différente.

Dans un mode de réalisation, ce dispositif de liaison comporte une première frette montée sur le tube céramique et une deuxième frette montée sur la première frette, la deuxième frette présentant un coefficient de dilatation inférieur à celui de la première frette. En cas d'augmentation de la température, la deuxième frette s'oppose donc à la dilatation de la première frette, et empêche ainsi une perte d'étanchéité ou une désolidarisation de la première frette. En outre, ce type d'assemblage s'est révélé particulièrement fiable dans les conditions d'un four de production d'éthylène.

La figure 3 représente un exemple d'assemblage au moyen d'un dispositif de liaison selon un mode de réalisation préféré, non limitatif, de l'invention.

Dans un souci de clarté, on considère que les tubes représentés sur la figure 3 sont positionnés suivant un axe vertical V. De manière non limitative, on utilise les mots « haut », « bas », « supérieur » et « inférieur » pour qualifier des organes ou des parties d'organe en fonction de leur position par rapport à cet axe.

La figure 3 représente la partie inférieure 20 d'un tube céramique 22 d'axe X connectée coaxialement à la partie supérieure 24 d'un tube métallique 26 au moyen d'un dispositif de liaison 30.

Les tubes céramique 22 et métallique 26 présentent, sauf au niveau du dispositif de liaison, des sections transversales annulaires identiques. Le diamètre extérieur des tubes 22 et 26 est de préférence supérieur à 50 mm et/ou inférieur à 100 mm. Le diamètre intérieur des tubes 22 et 26 est de préférence supérieur à 40 mm et/ou inférieur à 50 mm.

Le tube céramique 22 est en un matériau non oxyde, de préférence en carbure de silicium et présente de préférence une porosité inférieure à 1%, cette porosité étant fermée.

La partie inférieure 20 du tube céramique 22 est revêtue d'un revêtement 32 isolant thermiquement, par exemple en zircone. Le revêtement 32 s'étend suivant une surface annulaire destinée à servir de support à une première frette qui sera décrite ci-après. Il présente une épaisseur d'environ 30 µm.

Des clichés montrent, à l'interface entre le carbure de silicium du tube céramique 22 et la zircone du revêtement 32, la présence d'une couche de transition d'une épaisseur sensiblement constante d'environ 5 µm. La couche de transition est constituée d'une couche de silice continûment adhérente au tube céramique 32.

Sauf dans sa partie supérieure 24, le tube métallique 26 est un tube similaire aux tubes utilisés dans la technique intérieure en amont ou en aval des fours utilisés pour la production d'éthylène.

La partie supérieure 24 du tube métallique 26 comporte une paroi 34 dont l'épaisseur s'élargit progressivement jusqu'à être maximale dans un plan transversal P₁. Dans ce plan, le tube métallique 26 présente une surface annulaire 36 plane, sur laquelle un bord inférieur 38 du tube céramique 22 et/ou le bord inférieur de la première frette décrite ci-après viennent, dans le mode de réalisation non limitatif de la figure 3, prendre appui. Une jupe périphérique 40 cylindrique de section circulaire d'axe X s'étend vers le haut à partir de la périphérie de la surface annulaire 36.

Le dispositif de liaison 30 comporte une première frette 42 et une deuxième frette 44.

La première frette 42 est constituée en un matériau présentant un coefficient de dilatation inférieur à 25.10⁻⁶ K⁻¹ et supérieur à 10 x 10⁻⁶ K⁻¹ entre 20 et 1000°C, de préférence est constituée dans le même matériau que le tube métallique 26, par exemple en acier HP40 ou en un alliage FeNiCr. L'utilisation du même matériau pour fabriquer le tube métallique 26 et la première frette 42 facilite avantageusement leur soudure l'un à l'autre.

La première frette 42 présente une longueur L₄₂ totale d'environ 60 mm et une épaisseur e₄₂ de paroi sensiblement constante, de préférence comprise entre 1 et 5 mm, de préférence d'environ 2 mm. Les actions de la deuxième frette sur la première frette et de la première frette sur le tube céramique 22 sont alors optimales en cas d'augmentation de la température de 20°C à 900°C.

Dans un mode de réalisation, la première frette 42 présente une épaisseur e₄₂ de paroi sensiblement constante supérieure à 3 mm, voire supérieure à 3,5 mm, voire sensiblement égale à 4 mm. Les inventeurs ont en effet découvert que l'épaisseur de la première frette modifie la qualité de l'étanchéité de la liaison à température ambiante, les meilleurs résultats ayant été obtenus avec une épaisseur e₄₂ d'environ 4 mm.

La première frette 42 présente la forme d'un manchon cylindrique 46 de section circulaire et d'une longueur L₄₆ d'environ 50 mm, prolongé, vers le haut, par une collerette 48.

Sur toute sa longueur, le manchon cylindrique 46 est en contact avec le revêtement 32 du tube céramique 22, par l'intermédiaire d'une couche 50 d'un matériau compliant améliorant l'étanchéité entre le tube céramique et la première frette. La couche 50 présente une épaisseur, sensiblement constante, d'environ 30 µm.

Le matériau compliant comporte d'une part de l'argent et/ou de l'or, et d'autre part du palladium. Les inventeurs ont découvert qu'un tel matériau est particulièrement fiable. En particulier, ce matériau présente une très bonne réfractarité et une température de fusion très élevée qui le rendent compatible avec les contraintes rencontrées dans un four d'une unité de production d'éthylène.

Par exemple, le matériau compliant comporte environ 30% de palladium, le complément étant de l'argent.

Le manchon cylindrique 46 définit un bord inférieur 52 de la première frette 42. Le bord inférieur 52 du manchon cylindrique 46 est coplanaire au bord inférieur 38 du tube céramique 22 et peut être en contact avec la surface annulaire 36. Les inventeurs ont en effet découvert que cette configuration limite les risques de rupture du tube céramique 22.

La collerette 48 résulte d'un évasement progressif jusqu'à ce que la paroi de la première frette s'étende sensiblement perpendiculairement à l'axe X. Cet évasement progressif limite les risques de cassure du tube céramique lors du montage de la première frette 42 et facilite l'introduction du tube céramique 22 dans la première frette 22. La collerette 48 définit un "bord supérieur" 56, circulaire, de la première frette 42.

Le bord supérieur 58 de la jupe périphérique 40 est fixé sur le bord supérieur 56 de la collerette 48 au moyen d'un cordon de soudure 60. L'écartement radial δ entre la surface extérieure 61 du tube céramique 22 et le cordon de soudure 60 est par exemple d'environ 5 mm.

La surface annulaire 36, la jupe périphérique 40 et la première frette 42 définissent ainsi une chambre 62. Le cordon de soudure 60 est de préférence continu de sorte que la chambre 62 est sensiblement étanche. Eventuellement, la chambre 62 est également isolée du volume intérieur des tubes céramique 22 et métallique 26.

Le volume intérieur de la chambre 62 est de quelques dizaines de cm³, de préférence de plus de 20 cm³, de plus de 50 cm³, et/ou de préférence inférieur à 100 cm³, inférieur à 80 cm³, de préférence d'environ 70 cm³. Avantageusement, l'accumulation éventuelle de coke est ainsi limitée.

La deuxième frette 44 est constituée en un matériau présentant un coefficient de dilatation inférieur à celui de la première frette. La différence des coefficients de dilatation entre la première frette et la deuxième frette est déterminée en fonction de l'application. Lorsque le dispositif de liaison est destiné à subir des variations des températures telles que celles rencontrées à l'intérieur de l'enceinte d'un four d'unité de production d'éthylène ou immédiatement en amont ou en aval d'une telle enceinte, la deuxième frette peut notamment être en un alliage comportant plus de 70% de niobium et/ou de Dilver P1. Un tel alliage de niobium et/ou de Dilver P1 présente avantageusement un faible coefficient de dilatation thermique, un faible module de Young (module d'élasticité), et une bonne résistance à la chaleur et à la corrosion à haute température, cette dernière pouvant encore être améliorée par la présence d'un coating. Par exemple, le matériau de la deuxième frette comporte 89% de niobium, 10% d'hafnium et 1% de titane. La résistance à la corrosion peut encore être améliorée en revêtant la deuxième frette d'un revêtement de protection, ou "coating" du type "revêtement 32". La deuxième frette 44 présente la forme d'un manchon cylindrique de section circulaire et est montée sur la première frette par frettage par l'intermédiaire d'une couche 63 de matériau compliant, par exemple identique à celui s'étendant entre le tube céramique et la première frette.

La longueur L₄₄ de la deuxième frette 44 est sensiblement identique à celle du manchon cylindrique 46 de la première frette 42. L'épaisseur e₄₄ est comprise entre 3 et 15 mm, de préférence entre 5 et 13 mm. L'action de la deuxième frette sur la première frette est alors optimale en cas d'augmentation de la température.

Par ailleurs, la deuxième frette 44 est logée à l'intérieur de la chambre 62. Avantageusement, la deuxième frette 44 est ainsi protégée de l'extérieur. La jupe périphérique 40 agit ainsi comme bouclier de protection de la deuxième frette 44, mais aussi de la première frette 42.

Le bord inférieur 64 de la deuxième frette 44 est sensiblement coplanaire avec le bord inférieur 38 du tube céramique 22 et le bord inférieur 52 de la première frette 42. Cette configuration s'est en effet avérée optimale pour limiter le risque de cassure du tube céramique lors du montage de la deuxième frette.

Le bord supérieur 65 de la deuxième frette 26 est biseauté vers l'intérieur et vers l'extérieur.

La réalisation d'un dispositif de liaison tel que celui représenté sur la figure 3 peut s'effectuer de la manière suivante :
La partie inférieure du tube céramique 22 est d'abord recouverte du revêtement 32 isolant.
L'adhésion d'un revêtement en oxyde céramique sur un tube en un matériau non-oxyde est cependant difficile, en particulier lorsque le matériau non-oxyde n'est pas ou peu poreux.
En particulier, les techniques conventionnelles de projection directe de particules très fines dudit oxyde céramique au moyen d'une torche plasma se sont révélées inefficaces en cas de projection sur une première pièce en céramique non-oxyde.

Les inventeurs ont cependant découvert plusieurs nouveaux procédés pour revêtir un substrat à base d'un composé de silicium au moyen d'un revêtement comportant au moins un oxyde céramique. En particulier, ils ont découvert un procédé pour revêtir un substrat à base d'un composé de silicium au moyen d'un revêtement comportant au moins un oxyde céramique, comportant les étapes successives suivantes :
a1) application sur ledit substrat, de préférence à température ambiante, de particules comportant, de préférence constituées par, ledit au moins un oxyde céramique ;
b1) traitement thermique dudit substrat dans des conditions adaptées pour faire réagir ledit au moins un oxyde céramique avec du silicium du substrat de manière à former de la silice.

De préférence, les particules dudit au moins un oxyde céramique sont appliquées directement sur le substrat, sans couche intermédiaire. En particulier, aucune couche intermédiaire de silicium ou de silice n'est disposée sur le substrat avant l'étape a1). L'épaisseur de la couche de transition formée lors de l'étape b1) est alors avantageusement très faible, typiquement inférieure à 10 µm, voire inférieure à 8 µm ou même inférieure à 6 µm.

Dans un mode de réalisation préféré, un procédé selon l'invention ne comporte pas une étape permettant de former de la silice avant l'étape a1).

A l'étape a1), toutes les techniques conventionnelles peuvent être utilisées pour appliquer les particules. En particulier, on peut appliquer les particules dudit oxyde céramique par pulvérisation, peinture ou trempage. A cet effet on prépare une barbotine que l'on applique sur le substrat. La barbotine comporte classiquement un solvant, de préférence de l'eau, un dispersant organique, et lesdites particules.

De préférence, la barbotine ne comporte pas de silice, de préférence ne comporte pas de composé de silicium. Après cuisson, la silice ne sera donc présente que dans la couche de transition, un revêtement dépourvu de silice étant exposé à l'extérieur. L'absence de silice peut modifier la perméabilité du revêtement, mais, dans le mode de réalisation représenté, cette modification est sans effet pratique, le revêtement étant lui-même recouvert d'une couche en matériau compliant et/ou d'une première frette. En outre, le procédé de fabrication en est simplifié.

L'application peut se faire à température ambiante, par exemple à l'air libre. La quantité de particules est adaptée en fonction de l'épaisseur de revêtement souhaitée.

De préférence encore, le procédé ne comporte aucune étape entre les étapes a1) et b1).

A l'étape b1), le substrat est de préférence soumis à une cuisson à une température comprise entre 1000°C et 1400°C, de préférence pendant une durée supérieure à 1 heure, par exemple sous air.

De manière surprenante, le traitement thermique conduit à la formation, dans le substrat, d'une couche de transition dans laquelle une partie du composé de silicium a réagi pour former une couche de silice au sein du matériau du substrat. Sans pouvoir l'expliquer théoriquement, les inventeurs ont constaté que la couche de silice améliore considérablement la qualité de l'adhésion de l'oxyde céramique.

Dans un mode de réalisation préféré, un procédé selon l'invention ne comporte que les étapes a1) et b1). La silice de la couche de transition résulte ainsi exclusivement de l'exécution de l'étape b1).Le procédé est alors particulièrement facile à mettre en oeuvre.

Les inventeurs ont également développé des variantes de ce procédé.

En particulier, ils ont découvert un procédé pour revêtir un substrat à base d'un composé de silicium au moyen d'un revêtement comportant au moins un oxyde céramique, ce procédé comportant les étapes successives suivantes :
a2) oxydation, au moins en surface dudit substrat, dudit composé de silicium, par exemple par un traitement thermique sous atmosphère oxydante, de manière à former de la silice,
b2) application sur ledit substrat, de préférence à température ambiante, de particules comportant, de préférence constituées par, ledit au moins un oxyde céramique ;
c2) traitement thermique dudit substrat dans des conditions adaptées pour faire réagir ledit au moins un oxyde céramique avec ladite silice.

A l'étape a2), le traitement thermique d'oxydation peut être par exemple réalisé en chauffant la surface du substrat à une température de 1250°C pendant 3 heures, par exemple sous air, par exemple à pression atmosphérique.

Dans un mode de réalisation, seule une partie du substrat, en particulier seule sa surface, ou seule la portion de sa surface destinée à recevoir le revêtement, est chauffée. Par exemple, dans le cas d'un tube céramique, il n'est pas toujours nécessaire d'introduire tout le tube dans le four.

De préférence, seule une couche superficielle du substrat est oxydée. De préférence encore, le substrat n'est oxydé que sur une profondeur inférieure à 20 µm.

A l'étape b2), on peut appliquer les particules dudit au moins un oxyde céramique comme à l'étape a1).

A l'étape c2), le substrat est de préférence soumis à une cuisson à une température comprise entre 1000°C et 1400°C, de préférence pendant une durée supérieure à 1 heure, par exemple sous air.

Les inventeurs ont également inventé un procédé pour revêtir un substrat à base d'un composé de silicium au moyen d'un revêtement comportant au moins un oxyde céramique, ce procédé comportant les étapes successives suivantes :
a3) dépôt d'une couche de silicium en surface du substrat, de préférence par projection plasma ;
b3) application sur ladite couche de silicium, de préférence à température ambiante, de particules comportant, de préférence constituées par, ledit au moins un oxyde céramique ;
c3) optionnellement, traitement thermique dudit substrat pour faire réagir ledit au moins un oxyde céramique avec du silicium du substrat de manière à former de la silice.

A l'étape a3), une torche plasma conventionnelle peut être mise en oeuvre.

A l'étape b3), on peut appliquer les particules dudit au moins un oxyde céramique comme à l'étape a1).

L'étape c3) peut être réalisée comme l'étape b1). Cependant, dans ce procédé, avantageusement, aucun traitement thermique n'est nécessaire si, à l'étape b3) l'application des particules est effectuée par projection thermique. Le procédé en est avantageusement simplifié.

Il est possible de faire adhérer le revêtement 32 de zircone sur le substrat formé par la partie inférieure du tube céramique 22, en suivant un des trois procédés qui viennent d'être décrits.

Avant de mettre en place la première frette 42 sur la première pièce, une couche de précurseur de matériau compliant est appliquée sur la surface extérieure de la partie inférieure 20 du tube céramique 22 et/ou sur la surface intérieure (destinée à venir en contact avec la partie inférieure 20) de la première frette 42.

Le précurseur de matériau compliant peut être préparé sous forme d'une suspension en solvant organique. Cette suspension est alors appliquée, par exemple par pulvérisation, peinture ou trempage. Puis le solvant est éliminé, par exemple par séchage.

La granulométrie de la poudre de la suspension, la quantité et la nature du solvant sont adaptées en fonction de la nature des surfaces et de l'épaisseur de matériau compliant désirées.

Le montage de la première frette 42 sur la partie inférieure 20 du tube céramique 22 s'opère ensuite, de préférence en dilatant la première frette par chauffage, puis en l'introduisant axialement, par son extrémité axiale pourvue de la collerette 48, sur le tube céramique 22.

De préférence, la première frette est montée « affleurante » sur la partie inférieure 20 du tube céramique 22. Autrement dit, elle est immobilisée dans une position dans laquelle son bord inférieur 52 est aligné, dans un même plan transversal, avec le bord inférieur 38 du tube céramique. Les inventeurs ont constaté que cet agencement limite avantageusement le risque de rupture du tube céramique.

Comme expliqué ci-dessus, le carbure de silicium est très conducteur thermiquement et tout contact entre la première frette 42 et le tube céramique 22 entraînerait, en l'absence de revêtement 32, une contraction brutale de la première frette menant à son blocage axial avant qu'elle ait pu atteindre la position définitive souhaitée.

La présence du revêtement 32 limite les échanges thermiques entre la première frette 42 et le tube céramique 22, notamment en cas de contact. Lors de l'introduction de la première frette 42 sur le tube céramique 22, le revêtement isolant forme en effet, avantageusement, une barrière thermique limitant les transferts de chaleur entre la première frette 42 à haute température et le tube céramique 22 conducteur thermiquement.

On appelle « jeu » J la différence entre le diamètre intérieur de la première frette 42 et le diamètre extérieur du tube céramique 22. Au moment de l'introduction de la première frette 42 sur le tube céramique 22, le jeu J est positif et autorise le montage par emmanchement de la première frette sur le tube céramique 22. Grâce à la présence du revêtement, le jeu J peut être avantageusement considérablement réduit et/ou la température de la première frette diminuée, sans risque de blocage axial inopportun.

Le retour à la température ambiante conduit à une contraction de la première frette plus forte que celle du tube céramique, ce qui aboutit à une annulation du jeu J puis à une pression de la première frette sur le tube céramique 22 (figure 4). Avantageusement, cette compression contribue également à l'efficacité du matériau compliant. Avant de mettre en place la deuxième frette 44 sur la première frette 42, une couche de précurseur de matériau compliant est également appliquée sur la surface extérieure de la première frette 42 et/ou sur la surface intérieure de la deuxième frette 44, au moins sur les zones de ces surfaces destinées à être en contact après frettage.

La deuxième frette 44 peut alors être montée sur la première frette 42, par un frettage conventionnel (figure 5). La forme biseautée vers l'intérieur du bord supérieur 65 de la deuxième frette 44 facilite l'emmanchement sur la première frette.

Comme pour le montage de la première frette sur le tube céramique 22, un revêtement formant barrière thermique peut être également appliqué sur la surface extérieure de la première frette afin de limiter le jeu nécessaire lors de l'opération de frettage. De préférence, la deuxième frette est montée « affleurante » sur la première frette. Autrement dit, elle est immobilisée dans une position dans laquelle son bord inférieur 64 est aligné, dans un même plan transversal P₁, avec le bord inférieur 52 de la première frette. Les inventeurs ont constaté que cette position limite avantageusement le risque de rupture du tube céramique.

La forme biseautée vers l'extérieur du bord supérieur 65 de la deuxième frette 44 limite également, avantageusement, les contraintes appliquées sur le tube céramique 22.

Le tube céramique 22 est ensuite rapproché coaxialement du tube métallique 26 jusqu'à buter sur la surface annulaire 36. La première frette 42 et la deuxième frette 44 étant montées affleurantes au bord inférieur 38 du tube céramique 22, il est également possible que l'appui sur la surface annulaire 36 soit réalisé par l'intermédiaire du bord inférieur 52 de la première frette 42 et/ou du bord inférieur 64 de la deuxième frette.

Dans cette position de butée, telle que représentée sur la figure 6, le bord supérieur 58 de la jupe périphérique 40 est en regard du bord supérieur 56 de la collerette 48. Ces bords sont alors unifiés par soudure ou brasage.

La réalisation du cordon de soudure 60 implique classiquement des températures d'environ 1500°C. Avantageusement, la zone de jonction (cordon de soudure 60) entre le bord supérieur 56 de la collerette 48 et le bord supérieur 58 de la jupe périphérique 40 est à distance de la surface extérieure 61 du tube céramique 22. Avantageusement, le risque d'un choc thermique susceptible de casser le tube céramique en est limité.

Dans cette position, la première frette 42 et le tube métallique 26 délimitent la chambre 62. La deuxième frette est disposée dans la chambre 62. Avantageusement, elle est ainsi protégée des agressions, notamment physiques.

De préférence, le cordon de soudure 60 est sensiblement continu, de sorte que la chambre 62 est étanche, protégeant ainsi également la deuxième frette des agressions chimiques.

Le tube céramique 22 est alors fixé, de manière fiable, au tube métallique 26.

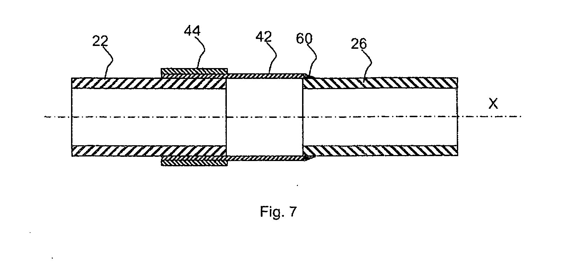

La figure 7 représente un dispositif selon l'invention selon une variante dans laquelle la première frette 42 présente la forme d'un manchon qui fait saillie au-delà de l'extrémité axiale du tube céramique 22. Le tube métallique est fixé à l'extrémité libre de la première frette 42 au moyen d'un cordon de soudure 60, à distance du tube céramique. La deuxième frette 44 est montée affleurante sur le tube céramique 22.

Des variantes du mode de réalisation représenté sur la figure 7 sont possibles. Par exemple, le tube métallique 26 peut être soudé bout à bout de la première frette 42, les chants de la première frette et du tube métallique étant en contact. Le diamètre intérieur et/ou le diamètre extérieur de la première frette 42 peuvent être constants ou variables le long de l'axe X. Le tube métallique 26 peut être également fixé à la surface extérieure de la première frette 42.

Des essais ont été effectués avec un dispositif de liaison du type de celui représenté sur la figure 3. Si on désigne par
- DE : le diamètre extérieur de l'ensemble formé par le tube céramique 22, le revêtement 32 et la couche 50 en matériau compliant,
- DE₄₂ : le diamètre extérieur de la première frette 42,
- DI₄₂ : le diamètre intérieur de la première frette 42,
- DI₄₂ : le diamètre intérieur de la deuxième frette 44,
- Δ₁: le rapport 100*(DE-DI₄₂)/DE, et
- Δ₂: le rapport 100*(DE₄₂-DI₄₄)/DE₄₂.
toutes les mesures étant effectuées à 20°C,
les combinaisons des valeurs suivantes de Δ₁ et Δ₂ ont conduit à des montages particulièrement fiables :

**Tableau 1**

| Exemple | e₄₂ | e₄₄ | Δ₁ | Δ₂ |
|---|---|---|---|---|
| 1 | 2 | 10 | 0,20 | 0,20 |
| 2 | 2 | 12 | 0,10 | 0,20 |
| 3 | 2 | 10 | 0,20 | 0,10 |
| 4 | 2 | 10 | 0,10 | 0,10 |
| 5 | 3 | 10 | 0,10 | 0,15 |
| 6 | 4 | 10 | 0,10 | 0,10 |
| 7 | 4 | 10 | 0,05 | 0,00 |

Des essais ont encore été effectués, avec le dispositif de l'exemple 6, pour mesurer l'intérêt d'un revêtement 32 à la surface du tube céramique et d'une couche 50 en matériau compliant interposé entre le revêtement 32 et la première frette 42.

Le matériau compliant était en un alliage Ag/Pd. Le tableau 2 suivant résume les résultats obtenus :

**Tableau 2**

| Exemple 6 | Résultats au cyclage thermique à 900°C |
|---|---|
| sans revêtement 32 ni couche 50 | Casse au deuxième cycle |
| avec revêtement 32 de zircone et couche 50 | Pas de casse après 5 cycles et étanchéité conservée |
| avec revêtement 32 d'alumine- zircone et couche 50 | |

Ces résultats montrent que le revêtement 32 et la couche 50 ont non seulement un effet sur l'étanchéité, mais aussi sur la résistance au cyclage thermique.

Bien entendu, l'invention n'est pas limitée à un mode de réalisation décrit et représenté.

En particulier, un frettage n'impose pas que la pièce frettée présente, dans une coupe transversale, un contour extérieur circulaire. Dans un mode de réalisation, la première pièce et/ou la première frette ne présente(nt) pas un contour circulaire. Avantageusement, toute rotation de la première frette et/ou de la deuxième frette, respectivement, autour de l'axe de la première frette et/ou de la deuxième frette, respectivement, est alors empêchée. La première pièce et/ou la première frette peuvent notamment présenter, en coupe transversale, un contour oblong, ou un contour présentant une pluralité de pointes, de préférence équiangulairement réparties autour de l'axe, par exemple une forme en étoile.

## Revendications

1. Dispositif comportant :
- une première pièce sous la forme d'un tube céramique comportant un substrat (22) en un matériau à base d'un composé de silicium,
- un revêtement (32) en un matériau de revêtement comportant au moins un oxyde céramique, une couche de transition comportant de la silice s'étendant entre le substrat et le revêtement, ladite couche de transition présentant une épaisseur inférieure à 10µm, et
- une première frette recouvrant, au moins partiellement, le revêtement et optionnellement, une couche en un matériau compliant constitué par un alliage comportant au moins deux matières parmi l'argent, l'or, et le palladium, le revêtement définissant au moins une partie de l'interface entre ladite première pièce d'une part et ladite première frette et/ou ladite couche en un matériau compliant d'autre part.

2. Dispositif selon la revendication précédente, dans lequel le matériau dudit revêtement ne comporte pas de silicium.

3. Dispositif selon l'une quelconque des revendications précédentes, dans lequel ladite couche en un matériau compliant s'étend sur le revêtement, et ladite première frette s'étend sur ladite couche en un matériau compliant.

4. Dispositif selon l'une quelconque des revendications précédentes, dans lequel l'épaisseur du revêtement est inférieure à 300 µm, et/ou est supérieure à 10 µm.

5. Dispositif selon l'une quelconque des revendications précédentes, dans lequel le rapport entre la conductivité thermique du matériau du substrat et la conductivité thermique du matériau de revêtement est supérieur à 10.

6. Dispositif selon l'une quelconque des revendications précédentes, dans lequel le matériau de revêtement présente une conductivité thermique inférieure à 10 W.m⁻².°C⁻¹.

7. Dispositif selon l'une quelconque des revendications précédentes, dans lequel le matériau de revêtement comporte plus de 50% en pourcentage massique d'au moins un oxyde choisi dans le groupe formé par la zircone, éventuellement dopée, la cordiérite, l'alumine, la mullite, le titanate d'aluminium, l'oxyde d'yttrium, l'oxyde de magnésium, l'oxyde d'hafnium et les mélanges de ces matières.

8. Dispositif selon l'une quelconque des revendications précédentes, dans lequel le revêtement recouvre au moins partiellement une surface cylindrique du substrat, le revêtement ceinturant ladite surface cylindrique.

9. Dispositif selon l'une quelconque des revendications précédentes, dans lequel un tube métallique est fixé sur ladite première frette.

10. Dispositif selon l'une quelconque des revendications précédentes, dans lequel une deuxième frette est montée sur ladite première frette, la deuxième frette présentant un coefficient de dilatation inférieur au coefficient de dilatation de la première frette entre 20°C et 1000°C.

11. Dispositif selon l'une quelconque des revendications précédentes, dans lequel la couche de transition présente une épaisseur supérieure à 0,1 µm.

12. Dispositif selon l'une quelconque des revendications précédentes, dans lequel le substrat est en un matériau présentant un coefficient de dilatation inférieur à 10 x 10⁻⁶ K⁻¹ entre 20°C et 1000°C.

13. Appareil choisi parmi un four, une chaudière, un surchauffeur, un générateur de vapeur, un réacteur chimique et un échangeur thermique, comportant au moins un tube en carbure de silicium fixé par au moins une de ses extrémités à un tube métallique, le tube en carbure de silicium constituant une première pièce d'un dispositif conforme à l'une quelconque des revendications précédentes.

14. Utilisation d'un appareil selon la revendication précédente dans une unité de vapocraquage ou dans une unité de valorisation des déchets, en particulier un incinérateur d'ordures ménagères.

15. Procédé de fabrication d'un dispositif selon l'une quelconque des revendications 1 à 12, comportant les étapes successives suivantes :
a1) application sur ledit substrat de particules comportant ledit au moins un oxyde céramique ;
b1) traitement thermique dudit substrat dans des conditions adaptées pour faire réagir ledit au moins un oxyde céramique avec du silicium du substrat de manière à former un revêtement en ledit au moins un oxyde céramique et une couche de transition comportant de la silice à la transition entre ledit substrat et ledit revêtement ;
c1) optionnellement, application d'une couche d'un matériau compliant à la surface extérieure dudit revêtement ;
d1) montage d'une première frette de manière que ladite première frette recouvre, au moins partiellement ledit revêtement.
ou comportant les étapes successives suivantes :
a2) oxydation, au moins en surface dudit substrat, dudit composé de silicium de manière à former de la silice sur la surface ;
b2) application sur ledit substrat de particules comportant ledit au moins un oxyde céramique ;
c2) traitement thermique dudit substrat dans des conditions adaptées pour faire réagir ledit au moins un oxyde céramique avec ladite silice de manière à former un revêtement en ledit au moins un oxyde céramique et une couche de transition comportant de la silice à la transition entre ledit substrat et ledit revêtement ;
d2) optionnellement, application d'une couche d'un matériau compliant à la surface extérieure dudit revêtement ;
e2) montage d'une première frette de manière que ladite première frette recouvre, au moins partiellement ledit revêtement.
ou comportant les étapes successives suivantes :
a3) dépôt d'une couche de silicium en surface du substrat ;
b3) application sur ladite couche de silicium de particules comportant ledit au moins un oxyde de céramique ;
c3) optionnellement, traitement thermique dudit substrat pour faire réagir ledit au moins un oxyde céramique avec du silicium du substrat de manière à former un revêtement en ledit au moins un oxyde céramique et une couche de transition comportant de la silice à la transition entre ledit substrat et ledit revêtement ;
d3) optionnellement, application d'une couche d'un matériau compliant à la surface extérieure dudit revêtement ;
e3) montage d'une première frette de manière que ladite première frette recouvre, au moins partiellement ledit revêtement.

16. Procédé selon la revendication précédente, dans lequel, à l'étape b1) ou c2), le substrat est soumis à une cuisson à une température comprise entre 1000°C et 1400°C.

## Patentansprüche

1. Vorrichtung, enthaltend:
- ein erstes Bauteil in der Form eines keramischen Rohres, das ein Substrat (22) aus einem Material auf der Basis einer Siliziumverbindung aufweist,
- eine Bekleidung (32) aus einem Bekleidungsmaterial, das wenigstens ein Keramikoxid enthält, eine Übergangsschicht, die Siliziumdioxid enthält und sich zwischen dem Substrat und der Bekleidung erstreckt, wobei die genannte Übergangsschicht eine Dicke von weniger als 10 µm hat, und
- einen ersten Schrumpfring, der die Bekleidung zumindest zum Teil bedeckt, und wahlweise eine Schicht aus einem nachgiebigen Material, die gebildet wird durch eine Legierung, die wenigstens zwei unter Silber, Gold und Palladium ausgewählte Materialien enthält, wobei die Bekleidung wenigstens einen Teil der Grenzfläche zwischen dem ersten Bauteil einerseits und dem ersten Schrumpfring und/oder der genannten Schicht aus nachgiebigem Material andererseits bildet.

2. Vorrichtung nach dem vorstehenden Anspruch, bei der das Material der Bekleidung kein Silizium enthält.

3. Vorrichtung nach einem der vorstehenden Ansprüche, bei der die Schicht aus dem nachgiebigen Material sich auf der Bekleidung erstreckt und der erste Schrumpfring sich auf der Schicht aus nachgiebigem Material erstreckt.

4. Vorrichtung nach einem der vorstehenden Ansprüche, bei der die Dicke der Bekleidung kleiner ist als 300 µm und/oder größer als 10 µm.

5. Vorrichtung nach einem der vorstehenden Ansprüche, bei der das Verhältnis zwischen der Wärmeleitfähigkeit des Materials des Substrats und der Wärmeleitfähigkeit des Materials der Bekleidung größer als 10 ist.

6. Vorrichtung nach einem der vorstehenden Ansprüche, bei der das Material der Bekleidung eine Wärmeleitfähigkeit von weniger als 10 W · m⁻² · °C⁻¹ hat.

7. Vorrichtung nach einem der vorstehenden Ansprüche, bei der das Material der Bekleidung wenigstens 50%, als Masse-Prozentsatz, eines Oxids enthält, das ausgewählt ist aus der Gruppe die gebildet wird durch Zirkon, ggf. dotiertes Zirkon, Cordierid, Aluminium, Mullit, Aluminiumtitanat, Yttriumoxid, Magnesiumoxid, Haffniumoxid und Mischungen dieser Materialien.

8. Vorrichtung nach einem der vorstehenden Ansprüche, bei der die Bekleidung wenigstens zum Teil eine zylindrische Oberfläche des Substrats bedeckt, wobei die Bekleidung die genannte zylindrische Oberfläche umschließt.

9. Vorrichtung nach einem der vorstehenden Ansprüche, bei der ein Metallrohr an dem ersten Schrumpfring befestigt ist.

10. Vorrichtung nach einem der vorstehenden Ansprüche, bei der ein zweiter Schrumpfring auf dem ersten Schrumpfring montiert ist, wobei der zweite Schrumpfring einen Schrumpfungskoeffizienten hat, der zwischen 20 °C und 1000 °C kleiner ist als der Schrumpfungskoeffizient des ersten Schrumpfrings.

11. Vorrichtung nach einem der vorstehenden Ansprüche, bei der die Übergangsschicht eine Dicke von mehr als 0,1 µm hat.

12. Vorrichtung nach einem der vorstehenden Ansprüche, bei der das Substrat aus einem Material gebildet ist, das zwischen 20 °C und 1000 °C einen Schrumpfungskoeffizienten von weniger als 10 x10⁻⁰⁶ K⁻¹ hat.

13. Apparat, ausgewählt unter einem Ofen, einem Dampfkessel, einem Überhitzer, einem Dampferzeuger, einem chemischen Reaktor und einem Wärmetauscher, mit wenigstens einem Rohr aus Siliziumcarbid, das mit wenigstens einem seiner Enden an einem Metallrohr befestigt ist, wobei das Rohr als Siliziumcarbid ein erstes Bauteil einer Vorrichtung nach einem der vorstehenden Ansprüche bildet.

14. Verwendung eines Apparates nach dem vorstehenden Anspruch in einer Dampfcrackanlage oder in einer Abfallverwertungseinheit, insbesondere einer Verbrennungsanlage für Hausabfälle.

15. Verfahren zur Herstellung einer Vorrichtung nach einem der Ansprüche 1 bis 12, mit den folgenden aufeinanderfolgenden Schritten:
a1) Auftragen von Partikeln, die das genannte wenigstens eine Keramikoxid enthalten, auf das genannte Substrat,
b1) thermische Behandlung des Substrats unter Bedingungen, die dazu angepasst sind, das Keramikoxid mit dem Silizium des Substrats reagieren zu lassen, um eine Bekleidung aus dem genannten wenigstens einen Keramikoxid und eine Übergangsschicht zu bilden, die am Übergang zwischen dem Substrat und der Bekleidung Siliziumdioxid enthält,
c1) wahlweise Anbringen einer Schicht aus einem nachgiebigen Material an der äußeren Oberfläche der genannten Bekleidung,
d1) Montieren eines ersten Schrumpfringes derart, dass der erste Schrumpfring die genannte Bekleidung zumindest zum Teil bedeckt,
oder mit den folgenden aufeinanderfolgenden Schritten:
a2) Oxidieren, zumindest an der Oberfläche des genannten Substrats, der genannten Siliziumverbindung, um Siliziumdioxid auf der Oberfläche zu bilden,
b2) Aufbringen von Partikeln, die das genannte wenigstens eine Keramikoxid enthalten, auf das genannte Substrat,
c2) thermische Behandlung des Substrats unter Bedingungen, die dazu angepasst sind, das genannte wenigstens eine Keramikoxid mit dem Siliziumdioxid in der Weise reagieren zu lassen, dass eine Bekleidung aus dem genannten wenigstens einen Keramikoxid und eine Übergangsschicht gebildet werden, die am Übergang zwischen dem Substrat und der Bekleidung Siliziumdioxid enthält,
d2) wahlweise Anbringen einer Schicht aus einem nachgiebigen Material an der äußeren Oberfläche der genannten Bekleidung,
e2) Montieren eines ersten Schrumpfrings in der Weise, dass dieser erste Schrumpfring die genannte Bekleidung zumindest zum Teil bedeckt,
oder die folgenden aufeinanderfolgenden Schritte aufweist:
a3) Ablagern einer Schicht aus Silizium auf der Oberfläche des Substrats,
b3) Aufbringen von Partikeln, die das genannte wenigstens eine Keramikoxid enthalten, auf der genannten Schicht aus Silizium,
c3) wahlweise thermische Behandlung des Substrats, um das genante wenigstens eine Keramikoxid mit dem Silizium des Substrats in der Weise reagieren zu lassen, dass eine Bekleidung aus dem genannten wenigstens einen Keramikoxid und eine Übergangsschicht gebildet werden, die am Übergang zwischen dem Substrat und der Bekleidung Siliziumdioxid enthält,
d3) wahlweise Anbringen einer Schicht aus einem nachgiebigen Material auf der äußeren Oberfläche der genannten Bekleidung,
e3) Montieren eines ersten Schrumpfrings in der Weise, dass dieser erste Schrumpfring die genannte Bekleidung zumindest zum Teil bedeckt.

16. Verfahren nach dem vorstehenden Anspruch, bei dem in dem Schritt b1) oder c2) das Substrat auf eine Temperatur zwischen 1000 °C und 1400 °C erhitzt wird.

## Claims

1. A device comprising:
- a first part in the form of a ceramic tube comprising a substrate (22) made of a material based on a silicon compound,
- a coating (32) made of a coating material comprising at least a ceramic oxide, a transition layer comprising silica extending between the substrate and the coating, said transition layer exhibiting a thickness of less than 10 µm, and
- a first shrink ring covering, at least partially, the coating and optionally a layer made of a compliant material composed of an alloy comprising at least two materials selected among silver, gold and palladium, the coating defining at least a portion of the interface between said first part on the one hand, and said first shrink ring and/or said layer made of a compliant material on the other hand.

2. The device according to the preceding claim, wherein the material of said coating does not comprise silicon.

3. The device according to any of the preceding claims, wherein said layer made of a compliant material extends over the coating and said first shrink ring extends over said layer made of a compliant material.

4. The device according to any of the preceding claims, wherein the thickness of the coating is less than 300 µm, and/or is greater than 10 µm.

5. The device according to any of the preceding claims, wherein the ratio of the thermal conductivity of the material of the substrate to the thermal conductivity of the coating material is greater than 10.

6. The device according to claim 1, wherein the coating material exhibits a thermal conductivity lower than 10 W.m⁻¹.°C⁻¹.

7. The device according to any of the preceding claims, wherein the coating material comprises more than 50% as a percentage by weight of at least one oxide selected from the group consisting of zirconia, which is optionally doped, cordierite, alumina, mullite, aluminum titanate, yttrium oxide, magnesium oxide, hafnium oxide and a mixture thereof.

8. The device according to any of the preceding claims, wherein the coating at least partially covers a cylindrical surface of the substrate, the coating encircling said cylindrical surface.

9. The device according to any of the preceding claims, wherein a metal tube is attached to said first shrink ring.

10. The device according to any of the preceding claims, wherein a second shrink ring is fitted to said first shrink ring, the second shrink ring exhibiting a thermal expansion coefficient lower than a thermal expansion coefficient of the first shrink ring from 20°C to 1000°C.

11. The device according to any of the preceding claims, wherein the transitional layer exhibits a thickness of greater than 0.1 µm.

12. The device according to any of the preceding claims, wherein the substrate is made of a material exhibiting a thermal expansion coefficient of less than 10 x 10⁻⁶ K⁻¹ from 20°C to 1000°C.

13. An item of equipment selected among a furnace, a boiler, a superheater, a steam generator, a chemical reactor and a heat exchanger, comprising at least one tube made of silicon carbide attached by at least one of its ends to a metal tube, the tube made of silicon carbide constituting a first part of a device being as any of the preceding claims.

14. Use of an item of equipment according to the preceding claim in a steam cracking unit or in a unit for the recovery of waste in particular a household waste incinerator.

15. A process for the manufacture of the device according to any of the preceding claims 1 to 12, comprising the following successive steps :
a1) applying to said substrate of particles comprising said at least one ceramic oxide;
b1) heat treating said substrate under conditions suitable for causing said at least one ceramic oxide to react with silicon of the substrate so as to form a coating made of said at least one ceramic oxide and a transitional layer comprising silica at the transition between said substrate and said coating;
c1) optionally, applying of a layer of a compliant material at the outside surface of said coating;
d1) assembly of a first shrink ring such that said first shrink ring covers, at least partially said coating,
or comprising the following successive steps :
a2) oxidizing, at least on the surface of said substrate, said silicon compound, so as to form silica on the surface;
b2) applying, to said substrate, particles comprising said at least one ceramic oxide;
c2) heat treating said substrate under conditions suitable for causing said at least one ceramic oxide to react with said silica, so as to form a coating made of said at least one ceramic oxide and a transitional layer comprising silica at the transition between said substrate and said coating;
d2) optionally, applying of a layer of a compliant material at the outside surface of said coating;
e2) assembly of a first shrink ring such that said first shrink ring covers, at least partially said coating,
or comprising the following successive steps :
a3) depositing a layer of silicon on the surface of the substrate;
b3) applying, to said silicon layer, particles comprising said at least one ceramic oxide,
c3) optionally, heat treating said substrate under conditions suitable for causing said at least one ceramic oxide to react with silicon of the substrate so as to form a coating made of said at least one ceramic oxide and a transitional layer comprising silica at the transition between said substrate and said coating;
d3) optionally, applying of a layer of a compliant material at the outside surface of said coating;
e3) assembly of a first shrink ring such that said first shrink ring covers, at least partially said coating.

16. A process according to the preceding claim, wherein, at step b1) or c2), the substrate is subject to a temperature of between 1000 °C and 1400 °C.
